(19) Europäisches Patentamt
European Patent Office
Office européen des brevets

(11) Veröffentlichungsnummer : **0 129 674 B2**

(12) **NEUE EUROPÄISCHE PATENTSCHRIFT**

(45) Veröffentlichungstag der neuen Patentschrift : **05.02.92 Patentblatt 92/06**

(51) Int. Cl.$^5$ : **G03C 1/91,** G03F 7/00, C08G 63/68, C08J 7/04

(21) Anmeldenummer : **84104817.6**

(22) Anmeldetag : **28.04.84**

(54) **Polyesterfolie mit Haftvermittlerschicht aus Copolyester.**

(30) Priorität : **16.05.83 US 495192**

(43) Veröffentlichungstag der Anmeldung : **02.01.85 Patentblatt 85/01**

(45) Bekanntmachung des Hinweises auf die Patenterteilung : **20.05.87 Patentblatt 87/21**

(45) Bekanntmachung des Hinweises auf die Entscheidung über den Einspruch : **05.02.92 Patentblatt 92/06**

(84) Benannte Vertragsstaaten : **DE FR GB LU NL**

(56) Entgegenhaltungen :
**EP-A- 0 029 620**
**GB-A- 1 589 926**
**JP-A- 5 302 536**

(56) Entgegenhaltungen :
**JP-A- 5 801 727**
**JP-A- 5 829 626**
**US-A- 4 257 928**
**US-A- 4 268 127**

(73) Patentinhaber : **AMERICAN HOECHST CORPORATION**
**Route 202-206 North**
**Somerville, N.J. 08876 (US)**

(72) Erfinder : **Posey, Robert G.**
**307 Pebble Creek Drive**
**Taylors South Carolina 29687 (US)**
Erfinder : **Culbertson, Edwin C.**
**107 Saratoga Drive**
**Greer South Carolina 29651 (US)**

(74) Vertreter : **Euler, Kurt Emil, Dr.**
**KALLE Niederlassung der Hoechst AG**
**Rheingaustrasse 190 Postfach 3540**
**W-6200 Wiesbaden 1 (DE)**



Jouve, 18, rue Saint-Denis, 75001 PARIS

## Beschreibung

Die Erfindung betrifft eine orientierte, selbsttragende Polyesterfolie, welche auf einer oder auf beiden Seiten eine durchgehende Haftvermittlerschicht aus Copolyester trägt.

Orientierte Polyesterfolien, insbesondere biaxial orientierte Folien aus Polyethylenterephthalat, werden in großem Umfang als Träger für Zeichenfolien, fotografische Filme und reprografische Folien sowie für Verpackungs- und Etikettierungszwecke eingesetzt. Da eine Folie dieser Zusammensetzung hydrophob ist und sich nicht leicht beschichten oder bedrucken läßt, muß sie in den meisten Fällen, in denen sie als Unterlage bzw. Träger für Beschichtungen dienen soll, zunächst auf einer Seite oder auf beiden Seiten mit einer Haftvermittlerschicht versehen werden, die auf der Folie haftet und gleichzeitig für weitere Beschichtungen aufnahmefähig ist. Aus den US-A-2,627,088 und 2,698,240 ist z.B. eine Haftvermittlerschicht für Polyethylenterephthalatfolie bekannt, die aus einem Vinylidenchlorid/Acrylester/Itaconsäure-Terpolymerisat besteht. Diese Haftvermittlerschicht soll eine ausgezeichnete Haftung auf der Polyesteroberfläche und auch gegenüber nachträglich aufgebrachten fotografischen Gelatineschichten auf wäßriger oder alkoholischer Basis aufweisen.

Die US-A-3,447,947 beschreibt eine Zeichenfolie mit einer Trägerfolie aus Polyethylenterephthalat, die mit einer Haftvermittlerschicht versehen ist, welche u.a. aus einem in organischem Lösemittel löslichen gemischten Copolyester, enthaltend Terephthalat- und Isophthalateinheiten, bestehen kann. Die Schichten sollen sowohl an der Trägerfolie aus Polyester als auch an hydrophoben, filmbildenden, aus organischem Lösemittel aufgebrachten und feinteilige Körnungsmittel wie z.B. Siliciumoxid enthaltenden Zeichenschichten und an fotografischen Halogensilberemulsionsschichten und lichtempfindlichen Diazoschichten gut haften. Solche Beschichtungen eignen sich jedoch nicht besonders für die Anwendung beim Filmhersteller, weil sie als Lösungen oder Dispersionen aus organischem Lösemittel aufgetragen werden müssen. Aus Gründen der Gesundheitsfürsorge und Sicherheit verbietet sich die fabrikmäßige Anwendung von organischen Lösemitteln bei Beschichtungsprozessen während der Filmherstellung.

Zu weiteren Haftvermittlerschichten zählen die aus der US-A-3,819,773 bekannten gehärteten Acryl- oder Methacrylschichten, die aus wäßrigem Medium auf die Polyesterfolie aufgebracht werden können. Diese Haftvermittlerschichten haben jedoch den Nachteil, daß ihre Haftung gegenüber Beschichtungen auf wäßriger Basis wie z.B. direkt auf die Schichten aufgebrachte wäßrige Druckfarben oder wäßrige mattierte Zeichenschichten für die kommerzielle Verwendung nicht ausreicht.

Es sind auch Zusammensetzungen entwickelt worden, die bestimmte in Wasser dispergierbare oder lösliche Copolyester und Copolyesteramide enthalten und als Kleber für verschiedene Materialien wie z.B. Metall, Papier und Polyesterfolie oder als Binde, oder Schlichtemittel für synthetische Fasern geeignet sein sollen. Solche Massen sind z.B. aus den US-A-3,563,942 und 3,779,993 bekannt. Wäßrige Dispersionen aus ähnlichen Massen sind auch in der US-A-4,340,519 beschrieben; es handelt sich dabei um Copolyesterzusammensetzungen, die das Polyesterreaktionsprodukt einer aromatischen Dicarbonsäure, einer aliphatischen Dicarbonsäure, einer eine Metallsulfonatgruppe enthaltenden aromatischen Dicarbonsäure und Polyolkomponenten enthalten, wobei diese Zusammensetzung außerdem noch eine wasserlösliche organische Verbindung mit einer Siedetemperatur von 60 bis 200°C enthält. Die beschriebenen Copolyester bestehen vorzugsweise aus einer Mischung von kristallinen und nichtkristallinen Copolyestern. Diese Massen sind als Heißschmelzkleber, Beschichtungen und Bindemittel für Kunststoffasern oder -folien, einschließlich Polyesterkunststoffen, geeignet.

In neuerer Zeit sind in Wasser lösliche oder dispergierbare Copolyester, ähnlich den in US-A-3,563,942 und US-A-3,779,993 beschriebenen, bekannt geworden, die als Haftvermittlerschichten die Haftung von lichtempfindlichen Schichten auf Polyethylenterephthalatfolien verbessern sollen. Die US-A-4,252,885 und 4,304,851 beschreiben zum Beispiel eine Haftvermittlerschicht, die in Form einer wäßrigen Dispersion auf Polyethylenterephthalatfolie aufgebracht wird und aus einem Polyester mit freien Säuregruppen besteht, der durch Kondensation von einem oder mehreren Glykolen mit einer oder mehreren trifunktionellen organischen Säuren gebildet wird. Solche Haftvermittlerschichten sollen die Haftung fotografischer Schichten auf Polyesterfolien verbessern. EP-A-0 029 620 beschreibt eine Haftvermittlerschicht für Polyethylenterephthalatfolien, die sich für lichtempfindliche Schichten auf Gelatinebasis eignet. Dieser Haftvermittler basiert auf einer wäßrigen Dispersion des Kondensationsproduktes aus Ethylenglykol und einer Mischung von Terephthalsäure, Isophthalsäure und einem Salz der Sulfoisophthalsäure. US-A-4,181,528 lehrt, daß die Haftung hydrophiler fotografischer Emulsionen auf Polyesterfolien dadurch verbessert wird, daß man eine Unterbeschichtung aus einer wäßrigen Dispersion von Gelatine, einem wasserlöslichen Polyester, ähnlich den oben beschriebenen, und einem polyfunktionellen Aziridin als Vernetzungsmittel auf die Folie aufbringt.

Obwohl diese und andere Haftvermittlerschichten oder Unterbeschichtungen das Haftvermögen von Polyethylenterephthalatfolien für bestimmte Anwendungen wirkungsvoll verbessern, sind ihnen doch noch Grenzen

gesetzt. Zum Beispiel können viele thermoplastische oder gehärtete Haftvermittler auf Acryl- oder Methacrylbasis zwar zu einer brauchbaren Haftung gegenüber organische Lösemittel enthaltenden Beschichtungsmassen für fotografische oder druckende Schichten führen, doch bei vielen Beschichtungen oder Druckfarben auf wäßriger Basis ergeben diese Haftvermittler keine zufriedenstellende Haftung, wenn nicht zuvor über den ersten Haftvermittler eine zweite Haftvermittler- oder Unterschicht aufgetragen wird. Andererseits können viele der obengenannten, in Wasser dispergierbaren Polyester-Haftvermittler zwar eine zufriedenstellende Haftung bewirken, wenn sie unmittelbar mit Systemen auf wäßriger oder alkoholischer Basis zusammengebracht werden, sie haben jedoch keine befriedigende Haftung im direkten Kontakt mit Beschichtungen und Druckfarben auf Basis von organischen Lösemitteln. Aus diesem Grund muß der Hersteller von Folien häufig mehrere verschiedene Folientypen bereithalten, die jeweils mit einer anderen Haftvermittlerklasse oder -masse vorbeschichtet sind, um den unterschiedlichen Anforderungen der Weiterverarbeiter gerecht zu werden. Die Entwicklung einer Haftvermittlermasse, die die Oberflächen von Polyesterfolien sowohl für wäßrige als auch für in organischen Lösemitteln gelöste, direkt auf die haftvermittelnd vorbeschichtete Folie aufzubringende Beschichtungsmassen oder "Bedruckungen" aufnahmefähig macht, wäre für den Folienhersteller von großer Bedeutung.

Der vorliegenden Erfindung lag daher die Aufgabe zugrunde, eine orientierte, selbsttragende Polyesterfolie zu schaffen, die auf mindestens einer Seite eine Haftvermittlerschicht trägt, welche eine gleichmäßig gute Aufnahmefähigkeit für Beschichtungen auf Basis sowohl wäßriger als auch organischer Lösemittel aufweist. Außerdem soll der bei der Folienherstellung anfallende, bereits mit der Haftvermittlerschicht versehene Folienverschnitt problemlos als Regenerat wiederverwendbar sein.

Gelöst wird diese Aufgabe durch eine Folie der eingangs genannten Gattung, deren kennzeichnendes Merkmal darin zu sehen ist, daß der die Haftvermittlerschicht bildende Copolyester das Kondensationsprodukt der folgenden polykondensierbaren Verbindungen oder deren zur Bildung von Polyestern befähigter Derivate ist:

A) 60 bis 75 Mol-% Terephthalsäure;

B) 15 bis 25 Mol-% einer zweibasigen aliphatischen Carbonsäure, der Formel $HOOC-(CH_2)_n-COOH$, wobei n im Bereich von 1 bis 11 liegt;

C) 7 bis 15 Mol-% einer alkalimetallsulfonatgruppenhaltigen aromatischen Dicarbonsäure, bei der der Schwefel mit dem aromatischen Rest verknüpft ist;

D) gegebenenfalls bis zu 15 Mol-% Isophtalsäure;

E) die zur Bildung von 100 Mol-% Kondensat nötige stöchiometrische Menge an Ethylenglykol, gegebenenfalls -in Kombination mit Neopentylglykol,

wobei die Mol-%-Angaben jeweils bezogen sind auf die Gesamtmenge der den Copolyester bildenden Verbindungen.

Eine erfindungsgemäß bevorzugte orientierte Trägerfolie aus Polyester besteht aus Polyethylenterephthalat, obwohl die Erfindung sich ebenso auf eine Folie auf der Basis eines kristallisierbaren Polyesters anwenden läßt, der durch Polykondensation eines Glykols, z.B. Ethylenglykol oder Butandiol bzw. deren Mischungen, mit Terephthalsäure oder Mischungen aus Terephthalsäure und anderen Dicarbonsäuren, z.B. Isophthalsäure, Diphensäure und Sebacinsäure oder deren zur Bildung von Polyestern befähigte Derivate, entsteht. Die Polyester werden nach bekannten Verfahren hergestellt.

Wie bereits ausgeführt werden die als Haftvermittlerschichten auf Polyesterfolien geeigneten Copolyester durch Polykondensation der Komponenten A) bis E) hergestellt. Die insgesamt vorhandenen Säurederivate sollen im wesentlichen den insgesamt vorhandenen Glykolderivaten molar entsprechen.

Dicarbonsäuren, die als Komponente B) der Copolyester geeignet sind, sind zum Beispiel Malonsäure, Adipinsäure, Azelainsäure, Glutarsäure, Sebacinsäure, Korksäure, Bernsteinsäure und Brasilinsäure sowie Mischungen dieser Säuren oder deren zur Bildung von Polyestern befähigte Derivate.

Die Verbindungen der Komponente C), die eine mit dem aromatischen Ring einer aromatischen Dicarbonsäure verknüpfte Metallsulfonatgruppe enthalten, entsprechen zum Beispiel der folgenden allgemeinen Formel:

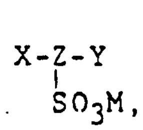

worin

M ein monovalentes Kation eines Alkalimetalls darstellt,

Z eine dreiwertige aromatische Gruppe bedeutet und

X und Y Carboxylgruppen oder deren zur Bildung von Polyestern befähigte Derivate sind.

Verbindungen dieser Art sind in US-A-3,563,942 und US-A-3,779,993 beschrieben. Dazu zählen beispielsweise Terephthalsäure(Na-sulfonat), Isophthalsäure-5-(Na-sulfonat), Phthalsäure(Na-sulfonat), Isophthalsäure-5-(phenoxy-p-propoxy-Na-sulfonat) bzw. deren zur Bildung von Polyestern befähigte Derivate wie z.B. Dimethylester. M ist vorzugsweise $Na^+$, $Li^+$ oder $K^+$.

Der Begriff "zur Bildung von Polyestern befähigte Derivate" bezeichnet Verbindungen mit Gruppen, die zu Kondensationsreaktionen unter Bildung von Polyesterverbindungen befähigt sind. Zu diesen Gruppen zählen Carboxylgruppen sowie deren niedere Alkylester, z.B. Dimethylterephthalat, Diethylterephthalat und andere entsprechende Ester, Halogenide oder Salze.

Gegenbenenfalls kann als polykondensierbare Verbindung bis zu 15 Mol-% Isophthalsäure eingesetzt werden.

Die Copolyester können nach bekannten Polymerisationsverfahren hergestellt werden. Im allgemeinen verfährt man so, daß man die Säurekomponenten mit dem Glykol zusammenbringt, in Gegenwart eines Veresterungskatalysators erhitzt und anschließend einen die Polykondensation herbeiführenden Katalysator zusetzt.

Um eine haftvermittelnd beschichtete Folie mit zufriedenstellender Haftung gegenüber Beschichtungen auf Basis sowohl wäßriger als auch organischer Lösemittel zu erhalten, ist es wesentlich, die als Komponenten A) bis E) angegebenen Verbindungen in den ebenfalls angegebenen Mengenbereichen einzuhalten.

In einer bevorzugten Ausführungsform besteht die Komponente A) aus Terephthalsäure in einer Menge von 65 bis 73 Mol-% Als Komponente B) werden Adipinsäure, Azelainsäure, Sebacinsäure, Malonsäure, Bernsteinsäure und Glutarsäure sowie Mischungen dieser Säuren bevorzugt, die in einer Menge von 18 bis 22 Mol-%, bezogen auf die Gesamtmenge der den Copolyester bildenden Komponenten eingesetzt werden. Besonders bevorzugt ist Adipinsäure.

Die als Komponente C) eingesetzte Verbindung muß in einem Anteil von 7 bis 15 Mol-% in dem System enthalten sein, damit der Haftvermittler in Wasser dispergierbar ist. Vorzugsweise beträgt der Anteil dieser Verbindung 7 bis 10 Mol-%.

Die Glykolkomponente E) ist in stöchiometrischen Mengen anwesend. Es hat sich gezeigt, daß Oxaalkylenglykole wie z.B. Diethylenglykol die Haftung des Haftvermittlers gegenüber Beschichtungen auf Lösemittelbasis beeinträchtigen. Ein Diethylenglykolanteil von 5 Mol-% oder mehr, bezogen auf 100 Mol-% Glykol, muß z. B. vermieden werden. Im Idealfall liegt die Glykolkomponente in relativ reiner Form vor.

Bei der Synthese der Copolyester-Haftvermittler werden alle eingesetzten Dicarbonsäuren am besten in Form ihrer niedermolekularen Dialkylester, insbesondere in Form ihrer Dimethylester, verwendet. Auf diese Weise kann die in situ-Bildung von Dialkylenglykolen, z.B. Diethylenglykol, wenn der Glykolreaktionspartner Ethylenglykol ist, besser gesteuert werden. Wie oben erwähnt verringern große Mengen solcher Stoffe in der Copolyesterzusammensetzung das gute Haftungsvermögen der Haltvermittlerschichten. Aus dem gleichen Grund wird das Schwefel enthaltende Monomere bevorzugt in Form des Alkalisalzes und nicht als die freie Sulfonsäure eingesetzt.

Die geeigneten Copolyesterbeschichtungen sollen ferner vorzugsweise eine Säurezahl unter 10, besonders bevorzugt zwischen 0 und 3, ein durchschnittliches Molgewicht von weniger als 50.000 und einen RV-Wert (relative Viskosität, gemessen in einem Ubbelohde-Kapillarviskosimeter an einer 1%igen Lösung in Dichloressigsäure bei 25°C) größer als 300 (bis 700), bevorzugt im Bereich zwischen 350 und 650, aufweisen.

Wie bereits erwähnt wird die Haftvermittlerschicht als wäßrige Dispersion mit einem Feststoffgehalt von ca. 0,5 bis 15%, vorzugsweise ca. 3 bis 10% auf die Polyester-Trägerfolie aufgebracht.

Vorzugsweise hat die Dispersion einen solchen Feststoffgehalt, daß sich eine Trockenschichtdicke im Bereich von ca, 0,0025 bis 0,25 μm ergibt; gewichtsmäßig entspricht das einem Feststoffgehalt von 0,003 $g/m^2$ bis 0,305 $g/m^2$. Die Dicke der getrockneten Copolyester-Haftvermittlerschicht liegt noch mehr bevorzugt im Bereich von 0,02 bis 0,05 μm, insbesondere bei 0,02 bis 0,04 μm.

Die Beschichtung kann ein- oder beidseitig auf die Folie aufgebracht werden. Bei einer einseitigen Beschichtung kann auf die Gegenseite der Folie auch eine andere Beschichtung aufgetragen werden, z.B. eine hitzehärtbare Acryl- oder Methacrylbeschichtung, entsprechend der Lehre der US-A-4,214,035. In manchen Fällen kann es auch wünschenswert sein, in die Rezeptur der Copolyesterbeschichtung ein Vernetzungsmittel einzubeziehen, z.B. ca. 1 bis 20 Gew.-% eines Melamin- oder Harnstoff-Formaldehyd-Kondensationsproduktes, um so die Eigenschaften der Haftvermittlerschicht weiter zu modifizieren. Die Beschichtungsrezeptur kann außerdem weitere bekannte Zusätze enthalten, wie z.B. Antistatika, Netzmittel, pH-Regulatoren, Antioxidantien, Farbstoffe, Pigmente, Gleitmittel, wie z.B. kolloidales $SiO_2$ usw.

Die Copolyester-Haftvermittlerschichten haben eine ausgezeichnete Hitzebeständigkeit, und daher kann sämtlicher während der Produktion anfallender Abfall der beschichteten Folie, mit frischem Polyester gemischt,

wieder aufgeschmolzen, dem Extruder zugeführt und zur Herstellung einer orientierten Folie verwendet werden. Eine derart hergestellte Folie, die bis zu ca. 70 Gew.-% an rückgewonnenem beschichtetem Abfall enthält, erweist sich als gut in Qualität, Farbe und Aussehen und zeigt eine sehr geringe oder gar keine erkennbare Verschlechterung der Eigenschaften aufgrund der durch die Beschichtung zu dem Polyethylenterephthalat hinzugekommenen Zusätze. Die haftvermittelnd vorbeschichtete Folie nach dieser Erfindung bietet also dem Folienhersteller einen deutlichen wirtschaftlichen Vorteil gegenüber vielen anderen vorbeschichteten Folien, z.B. Folien, die mit vinylidenchloridhaltigen Polymeren gemäß US-A-2,627,088 und US-A-2,698,240 vorbeschichtet sind und die bei der Wiedergewinnung, wie oben angegeben, zu Degradation und Verfärbungen neigen.

Die Folie der vorstehend beschriebenen Art kann nach bekannten Verfahren und mit bekannten Vorrichtungen gefertigt werden. Es wird z.B. eine Polyesterschmelze hergestellt und als amorphe Vorfolie auf eine polierte rotierende Gießwalze extrudiert, wo sie zu einer Folie aus dem Polymeren erstarrt. Anschließend wird, im Fall monoaxial orientierter Folien, die Folie in einer Richtung axial gestreckt, und zwar entweder in Extrusionsrichtung oder senkrecht zur Extrusionsrichtung, oder sie wird, im Fall biaxial orientierter Folien, sowohl in Längs- als auch in Querrichtung gestreckt. In einem ersten Streckschritt kann die gegossene Folie beliebig in eine dieser bei den rechtwinklig zueinander verlaufenden Richtungen gestreckt werden. Der Verstreckungsgrad kann etwa das 3 - bis 5-fache der ursprünglichen Abmessung der extrudierten Folie in einer oder beiden Richtungen ausmachen, wodurch die Folie Festigkeit und Zähigkeit erhält. Vorzugsweise liegt der Streckgrad bei etwa 3,2 bis 4,2, bezogen auf die ursprüngliche Abmessung. Die Temperaturen bei den Streckvorgängen liegen zwischen der Glasübergangstemperatur bis unterhalb der Temperatur, bei der das Polymere weich wird und schmilzt.

Falls erforderlich, wird die Folie nach dem Verstrecken wärmebehandelt, wobei die Dauer dieser Behandlung dem ur Kristallisation der Polyesterfolie benötigten Zeitraum entspricht. Die Kristallisation verleiht der Folie Beständigkeit und gute Festigkeitseigenschaften. Bei der Wärmebehandlung von Polyethylenterephthalat liegt die Temperatur im Bereich von etwa 190 bis 240°C, vorzugsweise im Bereich von etwa 215 bis 235°C.

Die Haftvermittlerschicht aus Copolyester, der in Form einer wäßrigen Dispersion vorliegt, kann in einer der beiden folgenden Stufen der Folienherstellung "in-line" aufgebracht werden:

In der Vorstufe der Streckung, d.h. zu einem Zeitdem ersten Strecken wie z.B. in GB-A-1 411 564 beschrieben oder zwischen den Streckstufen, d.h. nach dem uniaxialen Strecken jedoch vor dem biaxialen Strecken wie z.B. in US-A-4,214 035 beschrieben.

Normalerweise ist die Wärmebehandlung, der die Folie während der Streckungs- oder der sich daran anschließenden Weiterverarbeitungsstufen ausgesetzt wird, ausreichend, um Wasser und andere in der Beschichtung enthaltene flüchtige Bestandteile zu vertreiben und die Haftvermittlerschicht zu trocknen.

In einer bevorzugten Ausführung wird die Haftvermittlerschicht nach dem uniaxialen Strecken, d.h. nach dem Strecken der Folie in einer Richtung, jedoch vor dem Strecken in der im rechten Winkel dazu verlaufenden Richtung, aufgebracht. In einer weiteren bevorzugten Ausführung wird die Polyesterfolie vor dem Beschichten zunächst in Längsrichtung gestreckt und anschließend nach einem der bekannten Verfahren beschichtet. Die Beschichtung kann durch Auftragen mittels Walzen, durch Sprühen, mit Schlitzgießern oder durch Tauchen erfolgen. In bevorzugter Ausführung wird die Polyesterfolie mittels Rasterwalzen beschichtet. Ferner wird die uniaxial gestreckte Folie vor dem Beschichten wie bekannt vorzugsweise einer Coronabehandlung mit einem Coronaentladungsgerät unterzogen. Die Coronabehandlung vermindert die Hydrophobie der Polyesterfolienoberfläche, so daß die wäßrige Beschichtung die Oberfläche leichter benetzen kann und somit die Haftung der Beschichtung auf der Oberfläche verbessert wird.

Polyesterfolien, die mit der Copolystermasse vorbeschichtet sind, eignen sich ausgezeichnet als Trägerfolien zur Herstellung von lichtempfindlichen reprografischen Folien. Dazu wird auf eine Oberfläche der haftvermittelnd vorbeschichteten Polyesterfolie eine lichtempfindliche Masse aufgetragen und anschlieend getrocknet. Die lichtempfindliche Masse besteht aus einem in organischem Lösemittel gelösten Harz als Bindemittel, das eine lichtempfindliche Diazoniumverbindung enthält oder damit getränkt ist. Als Bindemittel geeignete Harze sind z.B. Celluloseacetobutyrat, Celluloseacetat, Celluloseacetopropionat sowie Vinylpolymere wie z.B. Polyvinylacetat. Geeignete Lösemittel sind Aceton, Methylethylketon, Methylisobutylketon, Ethylenglykolmonomethylether sowie Gemische aus diesen Lösemitteln. Diese reprografischen Beschichtungen sowie die Verfahren zu ihrer Anwendung sind bekannt.

Die haftvermittelnd vorbeschichtete Polyesterfolie nach der Erfindung ist auch ein ausgezeichnetes Substrat für matte Schichten und kann so als Zeichenmaterial verwendet werden. Solche Mattbeschichtungen können entweder auf einem wäßrigen oder einem organischen Lösemittelgemisch basieren, das ein Harz als Bindemittel und einen feinteiligen Stoff als "Körnungsmittel" enthält. Dabei können als Bindemittel die obengenannten Harze oder auch Acryl- oder Methacrylharze genommen werden. Ebenso können die oben aufgeführten organischen Lösemittel verwendet werden. Als "Körnungsmittel" dienen z.B. feinteilige Tone oder $SiO_2$.

(Teilchengröße vorzugsweise unter 10 μm). Es ist auch möglich, in Wasser dispergierbare oder lösliche Bindemittel wie z.B. Polyvinylalkohol oder hydrolysiertes Polyvinylacetat einzusetzen. Die Rezepturen solcher Mattbeschichtungen können außerdem weitere Bestandteile, z.B. Dickungsmittel oder Dispergiermittel, enthalten. Derartige Mattbeschichtungen sind z.B. in GB-A-1 072 122 beschrieben.

Die erfindungsgemäße haftvermittelnd vorbeschichtete Folie kann weiterhin als Verpackungs- oder Etikettierungsmaterial Verwendung finden. Die beschichteten Folien sind heißsiegelbar und weisen im vergleich zu anbeschichteten Folien auch eine verbesserte Haftung gegenüber Druckfarben auf der Basis von Wasser und organischen Lösemitteln auf. Solche Druckfarben können wäßrig/alkoholische Dispersionen oder Lösungen von Pigmenten bzw. Farbstoffen in Verbindung mit Acrylharzen und Dickungsmitteln oder in organischen Lösemitteln hergestellte Dispersionen oder Lösungen solcher Farbstoffe oder Pigmente in Verbindung mit Harzen sein.

Für eine weitere Anwendung der Erfindung hat es sich gezeigt, daß die Copolyester-Haftvermittlerschicht eine verbesserte Haftung zwischen monoaxial orientierten Polyesterfolien und darauf aufgebrachten Schichten aus Polyvinylalkohol oder Polyurethanharzen hat, wie sie bei der Herstellung von Polarisatoren verwendet werden. Zu diesem Zweck wird die Copolyesterbeschichtung vor dem Strecken auf die Oberfläche einer abgeschreckten amorphen, bewegten Polyesterbahn aufgebracht, die Beschichtung wird getrocknet, und dann wird unmittelbar auf die getrocknete; beschichtete Copolyesteroberfläche der bewegten Bahn als wäßrige Dispersion eine Polyvinylalkoholbeschichtung aufgetragen; die Bahn wird anschließend nur in einer Richtung, und zwar quer zu ihrer Bewegungsrichtung, gestreckt und gleichzeitig auf eine Temperatur erhitzt, die in etwa zwischen der Glasumwandlungstemperatur des Polyesters und 160°C liegt. Danach wird die Bahn wie oben beschrieben kristallisiert und abgekühlt und kann dann zur Herstellung von Laminaten mit Polyvinylalkoholfolie verwendet werden, wie es von der Herstellung von Polarisatoren bekannt ist.

Durch ihr ausgezeichnetes Haftungsvermögen, sowohl gegenüber Beschichtungen auf wäßriger Basis als auch gegenüber Beschichtungen auf der Basis von organischen Lösemitteln, ist die mit den Copolyesterschichten haftvermittelnd vorbeschichtete Polyesterfolie also für den Hersteller von fertigen Produkten für reprografische, grafische und Verpackungszwecke vielseitiger nutzbar.

Dieses Haftungsvermögen ist in der nachfolgenden Tabelle anhand von vier Versuchen veranschaulicht, d.h. einem Versuch unter Verwendung eines herkömmlichen in organischem Lösemittel gelösten reprografischen Lackes (Repro), einem Versuch unter Verwendung einer Mattbeschichtung (Matt) auf wäßriger Basis und zwei Versuchen mit pigmentierten Druckfarben auf wäßriger und Lösemittel-Basis.

Der für den Repro-Versuch verwendete Lack hatte folgende Zusammensetzung: 9 Gew.-Teile Celluloseacetobutyrat (20-Sekunden-Type), gelöst in einer Mischung aus 88 Gew.-Teilen Ethylenglykolmonomethylether und 3 Gew.Teilen Methylethylketon, wobei Rhodamin B als Farbstoff zugesetzt wurde (3 Gew.-Teile einer 1%igen Lösung von Rhodamin B in n-Butanol). Der Lack wurde mit Hilfe eines drahtumwickelten Stabes ®(Meyer-Rod Nr. 70) auf die mit Copolyester beschichtete Oberfläche der Folie aufgetragen und 5 Minuten bei 60°C im Ofen getrocknet. Mit einem Skalpell wurde eine Kreuzschraffierung in die Beschichtung eingeritzt, auf die schraffierte Fläche ein Klebeband ®(Scotch Tape 610) aufgedrückt, mit dem Fingernagel fest angedrückt und dann rasch von der Folie abezogen. Der auf der schraffierten Fläche zurückbleibende Lack wurde als Prozentanteil des insgesamt aufgetragenen Lackes angegeben d.h. kein Lack abgezogen = 100% Haftung, der gesamte Lack abgezogen = 0% Haftung, die Haftungswerte zwischen 0 und 100% bezeichnen jeweils den auf der Folie zurückgebliebenen Lackanteil. Der Versuch wurde zweimal an zwei Folienbögen (also insgesamt an vier Stellen) durchgeführt und als Haftungswert wurde der Wert des Prüfbereichs mit dem schlechtesten Ergebnis angegeben.

Der Matt-Versuch wurde an einer Mattbeschichtung aus einer 10 Gew.-%igen wäßrigen Dispersion auf der Basis eines zur Vernetzung befähigten Polyvinylalkohols durchgeführt. Die Beschichtungsmasse enthielt ferner ein dispergiertes feinteiliges $SiO_2$ und in Tensid. Sie wurde mit einem drahtumwickelten Stab ®(Meyer Rod Nr. 50) auf die mit Copolyester beschichtete Oberfläche der Folie aufgetragen, 5 Minuten bei 140°C im Ofen getrocknet und zum Abkühlen stehengelassen. Die Haftung der Beschichtung auf der Folie wurde wie oben im Repro-Versuch ermittelt.

Repro- und Matt-Haftungsversuche, die eine Haftung von 95% oder weniger ergaben, galten generell als nach industriellen Normen unannehmbar. Ergebnisse zwischen 95 und 100% galten als einigermaßen annehmbar, während 100%-Ergebnisse als angestrebte Norm für die kommerzielle Annehmbarkeit galten.

Der Druckfarbenversuch wurde mit drei verschiedenen Farbrezepturen auf Lösemittelbasis (die in zwei Fällen eine Nitrocellulose und im dritten Fall ein Polyamid enthielten) und mit einer Acrylharz enthaltenden Druckfarbe auf wäßriger Basis durchgeführt. Jeder Ansatz enthielt 10 Gew.-% feingemahlenes Pigment.

Mit den Druckfarben wurden Flachfolienbögen mit einer 180er-Offset-Rasterwalze (Tiefdruckzylinder, Viereckvertiefungen) beschichtet. Jeder Druckbogen wurde mindestens eine Minute bei 60° C getrocknet. Zur Prüfung der Haftung wurde ein Streifen Klebeband auf die Bedruckung aufgedrückt, fest angedrückt und dann

rasch abgezogen. Da dieser Versuch ein vergleichender Versuch ist, wurden die Haftungsergebnisse im Vergleich zu einer Kontrollprobe aus einer biaxial orientierten Polyethylenterephthalatfolie ohne Haftvermittlerschicht, jedoch mit einer nach dem gleichen Verfahren aufgebrachten Bedruckung angegeben. Die Ergebnisse in der Tabelle bezeichnen die ungefähre bedruckte Fläche, die bei jeder Probe im Vergleich zu der Kontrollprobe erhalten bleibt, d.h. 2X bedeutet: doppelt soviel Druckfarbe bleibt erhalten, 15X bedeutet: fünfzehnmal soviel Druckfarbe bleibt erhalten, usw. Die Ergebnisse der drei Druckfarben auf Basis von organischem Lösemittel sind als Durchschnittswert der drei Proben angegeben.

In den folgenden Beispielen wird die Erfindung näher erläutert.

**Beispiel 1**

Ein in Wasser dispergierbarer Copolyester, der, bezogen auf seinen Gesamtgehalt an Säure, ca. 73 Mol-% Terephthalsäure, 20 Mol-% Adipinsäure und 7 Mol-% Natriumsalz der 5-Sulfoisophthalsäure sowie, bezogen auf seinen Gesamtgehalt an Glykol, 100 Mol-% Ethylenglykol enthielt, wurde nach dem folgenden Verfahren hergestellt:

Ein 2 l fassender Reaktionsbehälter aus nichtrostendem Stahl, ausgerüstet mit einem Ankerrührer, einem Thermoelement zur Messung der Temperatur des Behälterinhalts, einer 45,7 cm -Claisen/Vigreux-Destillationskolonne mit Kühler und Vorlage, einer Einlaßöffnung und einem Heizmantel, wurde auf 190°C vorgeheizt, mit Stickstoff gespult und mit 907,3 g Terephthalsäuredimethylester 223,0 g Adipinsäuredimethylester, 132,7 g Na-Salz des 5-Sulfo-isophthalsäuredimethylesters und 794,5 g Ethylenglykol befüllt. Dann wurden eine Pufferlösung ($Na_2CO_3$. 10 $H_2O$, 3,577 g) und ein Umesterungskatalysator (Mn.$(OAc)_2$. 4 $H_2O$, 0,563 g) zugegeben. Die Mischung wurde gerührt und erhitzt, wobei Methanol aus dem Behälter abdestilliert wurde. Während der Destillation wurde die Temperatur im Behälter allmählich auf 250°C erhöht. Als das Gewicht des Destillats der theoretischen Methanolausbeute entsprach, wurde eine 0,188 g phosphorige Säure enthaltende Ethylenglykollösung hinzugefügt. Die Destillationskolonne wurde durch einen gebogenen Dampfabzugsstutzen mit Vorlage ersetzt. Dann wurde das Reaktionsgemisch mit Ethylencarbonat (20 g) versetzt, worauf sofort eine heftige Gasentwicklung einsetzte ($CO_2$). Die $CO_2$-Entwicklung ließ nach etwa 10 Minuten nach. Es wurde ein Vakuum von 319,9 mbar (240 mm Hg) erzeugt und der Polykondensationskatalysator (0,563 g $Sb_2O_3$ in einer Ethylenglykolaufschlämmung) zugesetzt. Unter dem Vakuum von 319,9 mbar (240 mm Hg) wurde das Gemisch 10 Minuten gerührt und anschließend der Druck in Schritten von jeweils 13,3 mbar (10 mm Hg/min) von 319,9 mbar (240 mm Hg) auf 26,6 mbar (20 mm Hg) gesenkt. Bei 26,6 mbar (20 mm Hg) Vakuum im Behälter wurde die Behältertemperatur mit einer Geschwindigkeit von 2°C/min von 250 auf 290°C erhöht. Bei 290°C Behältertemperatur wurde die Rührergeschwindigkeit reduziert und der Druck auf 0,13 mbar (0,1 mm Hg) oder darunter abgesenkt. An diesem Punkt wurde das Amperemeter des Rührermotors abgelesen. Die Viskosität des Polymeren wurde so gesteuert, daß man die Polykondensation nach festen Werten von 5 A für die Veränderung der Amperezahl ($\Delta$ A) des Rührermotors ablaufen ließ. Nach Erreichen des gewünschten Molgewichts wurde mit Stickstoff ein Druck im Reaktionsbehälter erzeugt und so das flüssige Polymere aus der Bodenöffnung des Behälters in ein Eiswasser-Abschreckbad gepreßt.

Zur Herstellung einer wäßrigen Dispersion des nach diesem Beispiel hergestellten Copolyesters wurden 60 g des Copolyesters in Form eines Granulats unter starkem Rühren in 1 l Wasser von 90°C in einen 2l fassenden nichtrostenden Stahlbecher gegeben. Nach vollständigem Dispergieren des Copolyesters wurde auf Raumtemperatur abgekühlt und filtriert. Dann wurden 1,12 g einer 50% Feststoff enthaltenden wäßrigen Dispersion aus kolloidalem $SiO_2$ unter Rühren zugegeben.

Diese Dispersion wurde anschließend als Haftvermittler auf eine nach dem folgenden Verfahren hergestellte Polyesterfolie aufgebracht:

Eine Polyethylenterephthalatschmelze wurde durch eine Breitschlitzdüse auf eine etwa 20°C warme Gießtrommel extrudiert. Die Schmelze erstarrte zu einer Vorfolie. Die Vorfolie wurde in einem Streckverhältnis von ca. 3,6: 1 längsgestreckt, wobei sie auf einer Temperatur von etwa 80° C gehalten wurde.

Die längsgestreckte Folie wurde einer Coronabehandlung unterzogen und anschließend mit Umkehrrasterwalzen mit der wie oben beschrieben hergestellten Copolyesterdispersion beschichtet.

Die coronabehandelte, längsgestreckte und beschichtete Folie wurde bei etwa 100°C getrocknet. Danach wurde sie im Verhältnis 3,6 : 1 quergestreckt, wodurch eine biaxial gestreckte Folie entstand. Die biaxial gestreckte Folie wurde bei 230°C thermofixiert. Das Trockengewicht der Beschichtung betrug ca. 0,038 $g/m^2$ bei einer Beschichtungsdicke von 0,032 $\mu$m.

Wie in Beispiel 1 beschrieben wurden noch acht weitere Copolyesterrezepturen im Rahmen dieser Erfindung mit den in der Tabelle genannten Zusammensetzungen (Beispiele 2 bis 9) hergestellt, in Wasser dispergiert und nach den oben beschriebenen Verfahren auf Polyesterfolien aufgetragen. Alle fertigen Beschichtungen hatten, bezogen auf das Trockengewicht, eine Dicke von etwa 0,025 $\mu$m.

Diese Folien mit Haftvermittlerschicht wurden nach den obengenannten Prüfverfahren auf ihre Haftung gegenüber reprografischen Beschichtungen (Repro), Mattbeschichtungen (Matt) und Druckfarbe (Druckfarbe) geprüft. Die Ergebnisse sind in der Tabelle aufgeführt.

**Tabelle**

| Beispiel | Säure | Mol-% | Glykol | Mol-% | RV | Haftung Repro | Haftung Matt | Druckfarbe Lösemittel | Druckfarbe wäßrig |
|---|---|---|---|---|---|---|---|---|---|
| 1 | Terephthalsäure-, Adipinsäure-dimethylester<br>SIPA (b) | – 73<br>– 20<br>– 7 | EG(c) | –100 | 583 | 100 % | 100 % | 4,5X | 14X |
| 2 | Terephthalsäure-, Adipinsäure-dimethylester<br>SIPA | – 70<br>– 20<br>– 10 | EG | –100 | 493 | 100 % | 95 % | 3X | 19X |
| 3 | Terephthalsäure-, Malonsäure-dimethylester<br>SIPA | – 70<br>– 20<br>– 10 | EG | –100 | 384 | 100 % | 100 % | 4X | 3X |
| 4 | Terephthalsäure-, Glutarsäure-dimethylester<br>SIPA | – 73<br>– 20<br>– 7 | EG | –100 | 567 | 100 % | 100 % | 4X | 10X |

| Beispiel | Säure | Mol-% | Glykol | Mol-% | RV | Haftung Repro | Haftung Matt | Druckfarbe Lösemittel | Druckfarbe wäßrig |
|---|---|---|---|---|---|---|---|---|---|
| 5 | Terephthalsäure-, Azelainsäure-di-methylester<br>SIPA | — 70<br>— 20<br>— 10 | EG | —100 | 499 | 100 % | 100 % | 4X | 18X |
| 6 | Terephthalsäure-, Sebacinsäure-di-methylester<br>SIPA | — 70<br>— 20<br>— 10 | EG | —100 | 395 | 100 % | 100 % | 3X | 19X |
| 7 | Terephthalsäure-, Methyl-Bern-steinsäure-dimethylester<br>SIPA | — 73<br>— 20<br>— 7 | EG | —100 | 538 | 100 % | 99 % | 5X | 19X |
| 8 | Terephthalsäure-, Isophthalsäure-, Adipinsäure-dime-methylester<br>SIPA | — 60,5<br>— 11,2<br>— 20,6<br>— 7,7 | EG | —100 | 502 | 100 % | 100 % | 5X | 19X |
| 9 | Terephthalsäure-, Adipinsäure-di-methylester<br>SIPA | —72,5<br>—20<br>— 7,5 | EG<br>NPG(d) | — 75<br>— 25 | 666 | 100 % | 99 % | 4,5X | 15X |
| 10V | Terephthalsäure-, Isophthalsäure-dimethylester<br>SIPA | —80<br>—10<br>— 10 | EG | —100 | 415 | 10 % | 50 % | NG | NG |
| 11V | Terephthalsäure-, dimethylester<br>SIPA | —85<br>—15 | EG | —100 | 363 | 25 % | 50 % | 4X | 19X |
| 12V | Terephthalsäure-, Adipinsäure-dime-methylester<br>SIPA | —80<br>—10<br>—10 | EG | —100 | 508 | 90 % | 50 % | NG | NG |
| 13V | Terephthalsäure-, Adipinsäure-di-methylester<br>SIPA | —60<br>—30<br>—10 | EG | —100 | 499 | 50 % | 90 % | NG | NG |
| 14V | Isophthalsäure-, Adipinsäure-di-methylester<br>SIPA | —70<br>—20<br>—10 | EG | —100 | 491 | 25 % | 85 % | 3X | 19X |

| Beispiel | Säure | Mol-% | Glykol | Mol-% | RV | Haftung Repro | Haftung Matt | Druckfarbe Lösemittel | Druckfarbe wäßrig |
|---|---|---|---|---|---|---|---|---|---|
| 15V | Terephthalsäure-, Isophthalsäure-, Adipinsäure-dimethylester<br>SIPA | −45,4<br>−26,2<br>−20,6<br>− 7,7 | EG | −100 | 524 | 25 % | NG | NG | NG |
| 16V | Terephthalsäure-, Isophthalsäure-dimethylester<br>SIPA | −53<br>−40<br>− 7 | EG | −100 | 541 | 0 % | 75 % | NG | NG |
| 17V | Terephthalsäure-, Adipinsäure-di-methylester<br>SIPA | − 70<br>− 20<br>− 10 | EG<br>DEG(e) | − 95<br>− 5 | 520 | 75% | 95% | 3X | 19X |
| 18V | Terephthalsäure-, Adipinsäure-di-methylester<br>SIPA | − 70<br>− 20<br>− 10 | EG<br>DEG | − 80<br>− 20 | 553 | 60% | 95% | NG | NG |
| 19V | Terephthalsäure-, Isophthalsäure-, Azelainäuredimethylester<br>SIPA | − 30<br>− 15<br>− 45<br>− 10 | EG<br>DEG | − 20<br>− 80 | 663 | 75% | 10% | 1X | 1X |
| 20V | Terephthalsäure-, Adipinsäure-di-methylester<br>SIPA | − 74<br>− 20<br>− 6 | EG | −100 | 602 | nicht ausreichend dispergierbar | | | |
| 21V | Terephthalsäure-, Adipinsäure-di-methylester<br>SIPA | − 76<br>− 20<br>−4 | EG | −100 | 697 | nicht ausreichend dispergierbar | | | |
| 22V | TMA(f) | −100 | EG<br>BA<(g)> | − 50<br>− 50<-> | 224 | 0% | 25% | 4X | 19X |
| 23V | PA(h)<br>TMA | − 56,5<br>− 43,5 | 1,4-B(i)<br>CHX (j) | − 90<br>− 10 | 171 | 90 % | 75 % | 4X | 19X |
| 24V | Eastman | MPS-7762® | | | 10 % | 90 % | NG | NG | |
| 25V | Eastman | WD-3652® | | | 50 % | 95 % | NG | NG | |
| 26V | Eastman | WNT-9519® | | | 75 % | 100 % | NG | NG | |

Anmerkungen:
(a)
(b) SIPA = Natriumsalz des 5-Sulfoisophthalsäure-dimethylesters
(c) EG = Ethylenglykol
(d) NPG = Neopentylglykol

(e) DEG = Diethylenglykol
(f) TMA = Trimellithsäureanhydrid
(g) BA = Benzylalkohol
(h) PA = Isophthalsäure
(i) 1,4-B = 1,4-Butandiol
(j) CHX = Cyclohexanol
RV = relative Viskosität, gemessen an einer 1%igen Lösung in Dichloressigsäure bei 25° C
NG = nicht geprüft

Zwölf Copolyester wurden als Vergleichsproben nach dem allgemeinen Verfahren des Beispiels 1 hergestellt, in Wasser dispergiet und wie oben beschrieben auf Polyesterfolie aufgetragen. Die entsprechenden Beispiele sind mit 10V bis 21V bezeichnet. Die Zusammensetzung dieser Copolyester ist in der Tabelle angegeben.

Die Copolyester der Beispiele 22V und 23V wurden nach den Verfahren der Beispiele 1 bzw. 18 aus US-A-4,304,851 hergestellt.

Außerdem wurden drei im Handel erhältliche (Tennessee Eastman Corp.) in Wasser dispergierte Copolyester bei gleichem Feststoffgehalt wie in Beispiel 1 auf eine Polyesterfolie aufgebracht. Es handelt sich dabei um die Beispiele 24V bis 26V.

Die Beispiele 10V bis 13V zeigen, daß die Haftung bei "Repro" und -Matt" im Falle von Copolyester-Haftvermittlern, die die aliphatische Dicarbonsäure-Komponente entweder nicht oder in einem Anteil außerhalb der beschriebenen Bereiche enthalten, beeinträchtigt ist. Aus den Beispielen 14V und 15V geht hervor, daß die Haftung bei -Repro" und -Matt" im Falle von Copolyestern mit übergroßen Anteilen an Isophthalsäure-Komponente beeinträchtigt ist. In Beispielen 17V und 18V sind die Haftungsprobleme bei Copolyester-Haftvermittlern mit einem Gehalt von 5% oder mehr an Diethylenglykol dargestellt. Die Haftungsprobleme mit anderen Copolyester-Haftvermittlerzusammensetzungen werden in den Beispielen 16V und 19V bis 26V aufgezeigt.

Keines der Beispiele 10V bis 26V repräsentien Copolyestermaterialien entsprechend der erfindungsgemäßen Polyesterfolie. Diese Materialien wurden genau wie oben angegeben auf ihre Haftung bei "Repro", "Matt" und "Druckfarbe" geprüft. Die Haftungsergebnisse sind gleichfalls in der Tabelle aufgeführt.

Aus den Angaben in der Tabelle ist ersichtlich, daß alle geprüften Materialien (mit Ausnahme des Beispiels 19V) die Druckfarbenhaftung auf Polyesterfolien in unterschiedlichem Maße verbesserten. Allerdings zeigten nur die Materialien der Beispiele 1 bis 9 darüber hinaus sowohl bei Repro- als auch bei Mattbeschichtungen eine für kommerzielle Zwecke zufriedenstellende Haftung.

**Beispiel 27**

Eine Polyethylenterephthalatschmelze wurde auf einer kalten Gießtrommel zu einer amorphen Folie extrudiert. Die so hergestellte Folie wurde zunächst mit einer 10 Gew.-%igen wäßrigen Dispersion des in Beispiel 1 beschriebenen Copolyesters beschichtet und der Copolyester mit Heißluftduschen und einem Wärmestrahler getrocknet. Dann wurde die getrocknete Oberfläche mit einer 10 Gew.-%igen wäßrigen Polyvinylalkohollösung (Vinol 205, Hersteller Air Products Corporation) mit Rollen auf ein Trockengewicht der Beschichtung von 488 mg/m$^2$ Folie beschichtet. Die Folie wurde aufgeheizt und bei einer Temperatur von 97 bis 105° C in der Heizzone quer zu ihrer Längsfonbewegungsrichtung um das Vierfache ihrer ursprünglichen Breite gestreckt. Die gestreckte Folie wurde auf eine Temperatur von 208 bis 214°C in der Heizzone aufgeheizt und während der Kristallisation in Querrichtung festgehalten. Die kristallisierte Folie wurde dann abgekühlt.

Eine 50 µm dicke, monoaxial orientierte Polyvinylaikoholfolie wurde auf die Polyvinylalkoholoberfläche der wie oben beschrieben vorbereiteten Folie laminiert. Zu diesem Zweck wurden beide Folien durch den Spalt eines Walzenpaares geführt und dabei zwischen den Folien ein wasserlöslicher Kleber aufgetragen.

Das laminat zeigte gegenüber einem Vergleichslaminat ohne Copolyester-Haftvermittlerschicht eine verbesserte Beständigkeit gegen Delaminieren.

## Patentansprüche

1. Orientierte, selbsttragende Polyesterfolie, welche auf einer oder auf beiden Seiten eine durchgehende Haftvermittlerschicht aus Copolyester trägt, dadurch gekennzeichnet, daß der die Haftvermittlerschicht bildende Copolyester das Kondensationsprodukt der folgenden polykondensierbaren Verbindungen oder deren zur Bildung von Polyestern befähigter Derivate ist:

A) 60 bis 75 Mol-% Terephthalsäure;

B) 15 bis 25 Mol-% einer zweibasigen aliphatischen Carbonsäure, der Formel $HOOC-(CH_2)_n-COOH$,

wobei n im Bereich von 1 bis 11 liegt;

C) 7 bis 15 Mol-% einer alkalimetallsulfonatgruppenhaltigen aromatischen Dicarbonsäure, bei der der Schwefel mit dem aromatischen Rest verknüpft ist;

D) Gegenbenfalls bis zu 15 Mol-% Isophthalsäure:

E) die zur Bildung von 100 Mol-% Kondensat nötige stöchiometrische menge an Ethylenglykol, gegebenenfalls in Kombination mit Neopentylglykol;

wobei die Mol-%-Angaben jeweils bezogen sind auf die Gesamtmenge der den Copolyester bildenden Verbindungen.

2. Folie nach Anspruch 1, dadurch gekennzeichnet, daß die Haftvermittlerschicht in getrocknetem Zustand eine Schichtdicke im Bereich von 0,0025 bis 0,25 μm, bevorzugt von 0,02 bis 0,05 μm, aufweist.

3. Folie nach Anspruch 1 oder 2, dadurch gekennzeichnet, daß die selbsttragende Polyesterfolie eine biaxial orientierte Polyethylenterephthalatfolie ist.

4. Folie nach einem der Ansprüche 1 bis 3 dadurch gekennzeichnet, daß die schwefelhaltige Verbindung der Komponente C in einer Menge von 7 bis 10 Mol-%, bezogen auf die Gesamtmenge der den Copolyester bildenden polykondensierbaren Verbindung, vorliegt und ausgewählt ist aus der Gruppe, bestehend aus Terephthalsäure(Na-sulfonat), Isophthalsäure-5-(Na-sulfonat), Phthalsäure(Na-sulfonat), Isophthalsäure-5-(phenoxy-p-propoxy-Na-sulfonat) und Dimethylisophthalat-5-Na-sulfonat bzw. deren zur Bildung von Polyestern befähigte Derivate.

5. Folie nach einem der Ansprüche 1 bis 4, dadurch gekennzeichnet, daß die aliphatische Carbonsäure der Komponente B Adipinsäure ist.

6 Folie nach einem der Ansprüche 1 bis 5, dadurch gekennzeichnet, daß der Copolyester eine Säurezahl von weniger als 10, bevorzugt im Bereich von 0 bis 3, aufweist, daß der Copolyester ein Molekulargewicht von weniger als 50.000 besitzt, daß seine relative Viskosität größer als 300 ist, bevorzugt im Bereich zwischen 350 und 650 liegt, und daß als zur Bildung von Polyestern befähigte Derivate der polykondensierbaren Verbindungen niedrige Dialkylester der entsprechenden Säuren A, B C und gegebenenfalls D verwendet worden sind.

7. Folie nach einem der Ansprüche 1 bis 6, dadurch gekennzeichnet, daß der Copolyester das Kondensationsprodukt ist aus

70 bis 73 Mol-% Dimethylterephthalat,

20 Mol-% Dimethyladipat,

7 bis 10 Mol-% Dimethylisophthalat-5-Na-sulfonat und

der zur Bildung von 100 mol-% Kondensat nötigen stöchiometrischen Menge Ethylenglykol.

8. Verfahren zur Herstellung einer Folie nach einem der Ansprüche 1 bis7 , bei dem zunächst durch Schmelzextrusion eine amorphe Polyesterfolie hergestellt wird, welche anschließend durch Strecken in eine oder zwei im rechten Winkel zueinander stehende Richtungen orientiert und einer Hitzenachbehandlung unterworfen wird und auf welche auf mindestens eine Oberfläche eine durchgehende Haftvermittlerschicht aus Copolyester als wäßrige Dispersion aufgebracht wird, wobei das Aufbringen vor oder nach dem ersten Strecken, aber vor dem Strecken in die zweite Richtung vorgenommen wird, und bei dem nach dem Aufbringen getrocknet wird, dadurch gekennzeichnet, daß eine wäßrige Dispersion mit einem in den Ansprüchen 1 und 4 bis 9 angegebenen Copolyester verwendet wird.

9. Verfahren nach Anspruch 8, dadurch gekennzeichnet, daß die Haftvermittlerschicht aus Copolyester auf beiden Seiten der Polyesterfolie aufgebracht wird.

10. Verfahren nach Anspruch 8, dadurch gekennzeichnet, daß die Haftvermittlerschicht aus Copolyestern nach dem ersten Strecken, aber vor dem Strecken in die zweite Richtung auf die Polyesterfolie aufgebracht wird.

11. Verfahren nach einem der Ansprüche 8 bis 10, dadurch gekennzeichnet, daß die Polyesterfolie nach dem ersten Strecken einer Coronabehandlung unterworfen wird, daß dann die wäßrige Dispersion mit dem die Haftvermittlerschicht bildenden Copolyester aufgebracht wird, daß dann bei 100°C getrocknet wird und daß dann die Polyesterfolie mit der aufgebrachten Haftvermittlerschicht in die zweite Richtung gestreckt wird.

12. Lichtempfindlicher Film, umfassend eine Folie mit einer Haftvermittlerschicht und einer lichtempfindlichen Schicht, die ein lichtempfindliches Diazoniumsalz und ein Bindemittel enthält, dadurch gekennzeichnet, daß er als Folie mit der Haftvermittlerschicht eine Folie nach einem der Ansprüche 1 bis 7 enthält.

13. Graphischer Film, umfassend eine Folie mit einer Haftvermittlerschicht und einer Schicht, die fein verteilte feste Teilchen und ein Bindemittel enthält, dadurch gekennzeichnet, daß er als Folie mit der Haftvermittlerschicht eine Folie nach einem der Ansprüche 1 bis7 enthält.

14. Film, umfassend eine Folie mit einer Haftvermittlerschicht nach einem der Ansprüche 1 bis 7, dadurch gekennzeichnet, daß er direkt auf der Haftvermittlerschicht eine Druckfarbenzusammensetzung trägt.

15. Polarisator, umfassend eine Folie mit einer Haftvermittlerschicht nach einem der Ansprüche 1 bis 7, dadurch gekennzeichnet, daß die selbsttragende Polyesterfolie monoaxial orientiert ist und direkt auf der Haftvermittlerschicht eine Schicht enthaltend Polyvinylalkohol trägt.

## Claims

1. An oriented self-supporting polyester film having a continuous adhesion-promoting coating of copolyester on one or both sides thereof, wherein the copolyester forming the adhesion-promoting coating consists essentially of the condensation product of the following polycondensible compounds or their polyester-forming derivatives:

A) 60 to 75 mole percent of terephthalic acid;

B) 15 to 25 mole percent of a dibasic aliphatic carboxylic acid of the formula $HOOC(CH_2)_n$-COOH, with n ranging from 1 to 11;

C) from 7 up to 15 mole percent of an aromatic dicarboxylic acid containing an alkali metal sulfonate group, with the sulphur being attached to the aromatic radical;

D) optionally up to 15 mole percent of isophthalic acid, and

E) ethylene glycol, optionally in combination with neopentyl glycol, in an amount corresponding to the stoichiometric quantity required to obtain 100 mole percent of the condensate;

hereby the mole percentages indicated in each case are related to the total amount of the compounds forming the copolyester.

2. The film of claim 1, wherein said adhesion-promoting coating has a dry thickness within the range of 0.0025 to 0.25 µm, preferably of 0.02 to 0.05 µm.

3. The film of claim 1 or 2 wherein said self-supporting polyester film is biaxially oriented polyethylene terephthalate film.

4. The film of any of claims 1 to 3, wherein the sulphur-containing compound of component C) is present at a level of from 7 to 10 mole percent, relative to the total quantity of the polycondensible compound forming the copolyester, and is selected from the group including terephthalic acid-(Na-sulfonate); isophthalic acid-5-(Na-sulfonate); phthalic acid-(Na-sulfonate); isophthalic acid-5-(phenoxy-p-propoxy-Na-sulfonate); dimethyl-isophthalate-5-Na-sulfonate; and their polyester-forming derivatives.

5. The film of any of claims 1 to 4, wherein the aliphatic carboxylic acid of component B) is adipic acid.

6. The film of any of claims 1 to 5, wherein the copolyester has an acid number of less than 10, preferably within the range of 0 to 3; a molecular weight of less than 50,000; a relative viscosity of more than 300, preferably within the range of 350 and 650; and wherein lower dialkyl esters of the corresponding acids A), B), C) and optionally D) are employed as polyester-forming derivatives of the polycondensible compounds.

7. The film of any of claims 1 to 6, wherein the copolyester is the condensation product obtained from
70 to 73 mole percent of dimethyl terephthalate;
20 mole percent of dimethyl adipate;
7 to 10 mole percent of dimethyl isophthalate-5-Na-sulfonate; and
the stoichiometric amount of ethylene glycol required to obtain 100 mole percent of condensate.

8. A process for preparing a film as claimed in any of claims 1 to 7 by first melt-extruding an amorphous polyester film and thereafter orienting the film by stretching in one or two mutually perpendicular directions and heat-treating the film and applying a continuous adhesion-promoting coating comprising an aqueous copolyester dispersion to at least one surface of the film, whereby said adhesion-promoting coating is applied prior to the first stretching or subsequent to the first stretching but prior to stretching in the second direction, said application being followed by a drying step, the process being characterized in that an aqueous dispersion containing one of the copolyesters indicated in claims 1 and 3 to 7 is employed.

9. The process of claim 8, wherein the adhesion-promoting coating of copolyester is applied to both surfaces of the polyester film.

10. The process of claim 8, wherein the adhesion-promoting coating of copolyester is applied to the polyester film subsequent to the first stretching, but prior to the stretching in the second direction.

11. The process of any of claims 8 to 10, wherein, subsequent to the first stretching, the polyester film is subjected to a corona treatment; thereafter the aqueous dispesion containing the copolyester forming the adhesion-promoting coating is applied; then drying is performed at 100 °C; and thereafter the polyester film provided with the adhesion promoting coating is stretched in the second direction.

12. A light-sensitive film comprising a film provided with an adhesion-promoting coating and a light-sensitive coating containing a light-sensitive diazonium salt and a binder, wherein the film provided with the adhesion-promoting coating is a film as claimed in any of claims 1 to 7.

13. A graphic film comprising a film provided with an adhesion-promoting coating and a coating containing finely divided solid particles and a binder, wherein the film provided with the adhesion-promoting coating is a

film as claimed in any of claims 1 to 7.

14. A film comprising a film provided with an adhesion-promoting coating as claimed in any of claims 1 to 7, where a printing ink composition is applied directly onto said adhesion-promoting coating.

15. A polarizer comprising a film provided with an adhesion-promoting coating as claimed in any of claims 1 to 7, wherein said self-supporting polyester film is monoaxially oriented and a polyvinyl alcohol-containing coating is applied directly to said adhesion-promoting coating.

## Revendications

1. Feuille de polyester sans support, orientée, qui porte sur l'une de ses faces ou sur les deux une couche continue de promoteur d'adhérence en copolyester, caractérisée en ce que le copolyester formant la couche de promoteur d'adhérence est le produit de condensation des composés polycondensables suivants ou de leurs dérivés capables de former des polyesters :

A) de 60 à 75 moles % d'acide téréphtalique,

B) de 15 à 25 moles % d'un acide dicarboxylique aliphatique, de formule $HOOC-(CH_2)_n-COOH$ dans laquelle n est un nombre de 1 à 11,

C) de 7 à 15 moles % d'un acide dicarboxylique aromatique contenant des groupes sulfonate de métal alcalin et dans lequel le soufre est relié au radical aromatique,

D) éventuellement jusqu'à 15 moles % d'acide isophtalique,

E) la quantité stoechiométrique nécessaire pour former 100 moles % de produit condensé, d'éthylène glycol, le cas échéant en combinaison avec du néopentyle glycol,

les indications de pourcentages de moles se rapportant dans chaque cas à la quantité totale des composés formant le copolyester.

2. Feuille selon la revendication 1, caractérisée en ce que la couche de promoteur d'adhérence à l'état sec a une épaisseur de couche comprise entre 0,0025 et 0,25 μm, de préférence entre 0,02 et 0,05 μm.

3. Feuille selon l'une des revendication 1 et 2, caractérisée en ce que la feuille de polyester sans support est une feuille de polytéréphtalate d'éthylène orientée biaxialement.

4. Feuille selon l'une quelconque des revendications 1 à 3, caractérisée en ce que le composé soufré formant le constituant C est présent en une quantité de 7 à 10 moles %, par rapport à la quantité totale du composé polycondensable formant le copolyester et est choisi parmi le sulfonate de sodium de l'acide téréphtalique, le 5-sulfonate de sodium de l'acide téréphtalique, le 5-sulfonate de sodium de l'acide isophtalique, le sulfonate de sodium de l'acide phtalique, le 5-phénoxy-P-propoxysulfonate de sodium de l'acide isophtalique et le 5-sulfonate de sodium du diméthylisophtalate ou leurs dérivés capables de former des polyesters.

5. Feuille selon l'une quelconque des revendications 1 à 4, caractérisée en ce que l'acide carboxylique aliphatique formant le constituant B est l'acide adipique.

6. Feuille selon l'une quelconque des revendications 1 à 5, caractérisée en ce que le copolyester a un indice d'acide inférieur à 10, de préférence compris entre 0 et 3, le copolyester possède une masse moléculaire inférieure à 50.000, sa viscosité relative est supérieure à 300, de préférence comprise entre 350 et 650, et comme dérivés des composés polycondensables, capables de former des polyesters, on utilise des esters de dialkyle inférieurs des acides correspondants A, B, C et éventuellement D.

7. Feuille selon l'une quelconque des revendications 1 à 6, caractérisée en ce que le copolyester est le produit de condensation de :

70 à 73 moles % de téréphtalate de diméthyle,

20 moles % de adipate de diméthyle,

7 à 10 moles % du 5-sulfonate de sodium de l'isophtalate de diméthyle, et de

la quantité d'éthylène glycol stoechiométriquement nécessaire pour la formation de 100 moles % de produit condensé.

8. Procédé pour la production d'une feuille selon l'une quelconque des revendications 1 à 7, dans lequel on produit d'abord une feuille de polyester amorphe par extrusion à l'état fondu, qu'on oriente ensuite par étirage dans une seule direction ou dans deux directions perpendiculaires entre elles et qu'on soumet à un traitement thermique avant d'appliquer sur au moins l'une de ses faces une couche continue de promoteur d'adhérence faite de copolyester sous forme de dispersion aqueuse, l'application étant effectuée avant ou après le premier étirage, mais de toute façon avant l'étirage dans la seconde direction, et qu'on sèche après le revêtement, lequel procédé est caractérisé en ce qu'on utilise une dispersion aqueuse avec un copolyester indiqué dans les revendications 1 et 3 à 7.

9. Procédé selon la revendication 8, caractérisé en ce que la couche de promoteur d'adhérence de copolyester est appliquée sur les deux faces de la feuille de polyester.

10. Procédé selon la revendication 8, caractérisé en ce que la couche de promoteur d'adhérence de copolyester est appliquée sur la feuille de polyester après le premier étirage, mais avant l'étirage dans la seconde direction.

11. Procédé selon l'une quelconque des revendications 8 à 10, caractérisé en ce que la feuille de polyester est soumise à un traitement corona après le premier étirage, la dispersion aqueuse avec le copolyester formant la couche de promoteur d'adhérence est ensuite appliquée, puis séchée à 100°C et la feuille de polyester recouverte de la couche de promoteur d'adhérence est étirée dans la seconde direction.

12. Film photosensible, comprenant une feuille avec une couche de promoteur d'adhérence et une couche photosensible, qui contient un sel de diazonium photosensible et un liant, lequel film est caractérisé en ce qu'il contient, comme feuille avec la couche de promoteur d'adhérence, une feuille selon l'une quelconque des revendications 1 à 7.

13. Film graphique, comprenant une feuille avec une couche de promoteur d'adhérence et une couche qui contient des particules solides finement divisées et un liant, lequel film est caractérisé en ce que, comme feuille avec la couche de promoteur d'adhérence, il contient une feuille selon l'une quelconque des revendications 1 à 7.

14. Film comprenant une feuille avec une couche de promoteur d'adhérence selon l'une quelconque des revendications 1 à 7, caractérisé en ce qu'il porte, directement sur la couche de promoteur d'adhérence, une composition d'encre.

15. Polariseur, comprenant une feuille avec une couche de promoteur d'adhérence selon l'une quelconque des revendications 1 à 7, caractérisé en ce que la feuille de polyester sans support est orientée monoaxialement et porte directement sur la couche de promoteur d'adhérence une couche contenant de l'alcool polyvinylique.